# EUROPEAN PATENT APPLICATION

(11) **EP 1 300 989 A1**
(43) Date of publication of application: **09.04.2003**
(21) Application number: 02726442.3
(22) Date of filing: 20.05.2002
(51) Int. Cl.: H04L 12/46, G06F 13/00

(54) **INFORMATION PROCESSING APPARATUS**

(30) Priority: 24.05.2001 JP 2001154751; 26.07.2001 JP 2001226390
(71) Applicant: Sony Corporation, Tokyo 141-0001 (JP)
(72) Inventor: NODA, Takuro, Tokyo 141-0001 (JP); SATO, Makoto, Tokyo 141-0001 (JP); AOKI, Yukihiko, Tokyo 141-0001 (JP); SHIMA, Hisato, Tokyo 141-0001 (JP)
(74) Representative: Pilch, Adam John Michael
(86) International application number: JP0204835
(87) International publication number: WO02096037

(57) **Abstract**

The present invention relates to an information processing apparatus capable of controlling an AV/C device from a UPnP control point. A UPnP control point 1 is connected with an IEEE 802 network 11, and AV/C devices 3, 4 are connected with IEEE 1394 network 12. The IEEE 802 network 11 and the IEEE 1394 network 12 are connected with each other through a UPnP device 2 functioning as a bridge. The UPnP device 2 converts an SOAP command transmitted from the UPnP control point 1 to an AV/C command to transfer the converted command to an AV/C device 3 through the IEEE 1394 network 12. The present invention can be applied to a personal computer.

## Description

### Technical Field

The present invention relates to an information processing apparatus, and more particularly to an information processing apparatus with which a device connected with a first network based on IEEE 802 can control a device connected with a second network based on IEEE 1394.

### Background Art

Nowadays, a network using a IEEE ( Institute of Electrical and Electronics Engineers) 1394 high speed serial bus (hereinafter referred to simply as "IEEE 1394 network") has become widespread. By connecting an audio device or a video device with the IEEE 1394 network, each device can control other devices by using AV/C commands.

On the other hand, an IEEE 802 network has also become popular. The IEEE 802 is a network mainly for connecting personal computers to each other. By being based on Universal Plug and Play (UPnP) protocol, each personal computer can control the other personal computers.

However, the IEEE 1394 network and the IEEE 802 network are independent from each other, and consequently there is a problem in which the devices connected with the IEEE 802 network (hereinafter, referred to as UPnP devices) cannot control the devices connected with the IEEE 1394 network device (hereinafter referred to as AV/C devices).

### Disclosure of the Invention

The present invention has been conceived in view of such a situation, and it aims at making it possible for a UPnP device to control an AV/C device.

An information processing apparatus of the present invention is characterized by a capture means for capturing data in a first format from a first network; conversion means for converting a command based on the SOAP in the first format, the command being captured by the capture means, to an AV/C command in a second network to store the converted command into a second format, and transmission means for transmitting the second format converted by the conversion means to the second network.

The conversion means includes a correspondence table of node unique ID and node ID, the node unique ID being described in the command based on the SOAP for designating a device connected with the second network, whereby the conversion means can convert the node unique ID, described in the command based on the SOAP for designating the device connected with the second network, to the node ID based on the correspondence table.

The conversion means includes a correspondence table of the command based on the SOAP and the command to be transmitted to the second network based on the command based on the SOAP, whereby the conversion means can retrieve the command based on the SOAP, the command corresponding to a response received through the second network, based on the correspondence table, and can transmit a response corresponding to the command based on the SOAP to the first network.

The conversion means can associate the command based on the SOAP with the response based on a transaction label included in the command based on the SOAP.

The conversion means can transmit a response indicating being in process to a device connected to the first network when a final response corresponding to a request from the device connected to the first network is not received within a predetermined period of time from a device connected to the second network.

The information processing apparatus can further be characterized by detection means for detecting a bus reset of the second network if the command based on the SOAP is a command requesting resending at the bus reset of the second network, and for transmitting the command at occurrence of the bus reset in the second network.

The conversion means can further convert the AV/C command of the second network to the command based on the SOAP of the first format to store the converted command into the first format, and the transmission means can further transmit the command based on the SOAP of the first format, the command being converted by the conversion means, to the first network.

An information processing method of the present invention is characterized by: a capture step of capturing data in a first format from a first network; a conversion step of converting a command based on SOAP in the first format, the command captured by a process of the capture step, to an AV/C command of a second network, and of storing the converted command into a second format; and a transmission step of transmitting the second format converted by a process of the conversion step to the second network.

A program of a recording medium of the present invention is characterized by: a capture step of capturing data in a first format from a first network; a conversion step of converting a command based on SOAP in the first format, the command captured by a process of the capture step, to an AV/C command of a second network, and of storing the converted command into a second format; and a transmission step of transmitting the second format converted by a process of the conversion step to the second network.

A program of the present invention makes the following steps execute: a capture step of capturing data in a first format from a first network; a conversion step of converting a command based on SOAP in the first format, the command captured by a process of the capture step, to an AV/C command of a second network, and of storing the converted command into a second format; and a transmission step of transmitting the second format converted by a process of the conversion step to the second network.

In the information processing apparatus, the method, the recording medium and the program of the present invention, a command based on SOAP from the first network based on IEEE 802 is converted to an AV/C command of the second network.

### Brief Description of Drawings

Fig. 1 is a diagram showing the configuration of a network system to which the present invention is applied;
Fig. 2 is a block diagram showing the configuration of a UPnP device 2 of Fig. 1;
Fig. 3 is a diagram showing the configuration of a device model which the UPnP device 2 of Fig. 1 has;
Fig. 4 is a diagram showing the configuration of an AV/C command frame;
Fig. 5 is a diagram illustrating a ctype;
Fig. 6 is a diagram illustrating a subunit_type;
Fig. 7 is a flow chart illustrating processes of the network system of Fig. 1;
Fig. 8 is a diagram showing the configuration of a command output at Step S3 of Fig. 7;
Fig. 9 is a diagram showing the configuration of a command output at the process of Step S24 of Fig. 7;
Fig. 10 is a diagram showing the configuration of a response output at the process of Step S34 of Fig. 7;
Fig. 11 is a diagram showing an example of a response output at the process of Step 26 of Fig. 7;
Fig. 12 is a diagram showing a configuration of AV/C Proxy Device Description which the root device of Fig. 3 has;
Fig. 13 is a diagram showing a configuration of AV/C Proxy Service Description which a 1394 proxy service of Fig. 3 has;
Fig. 14 is a diagram showing a configuration of AV/C Nodes Service Description which a 1394 nodes service of Fig. 3 has;
Fig. 15 is a diagram showing a configuration of AV/C Nodes Service Description which the 1394 nodes service of Fig. 3 has;
Fig. 16 is a diagram showing another configuration of AV/C Proxy Device Description which the root device of Fig. 3 has;
Fig. 17 is a diagram showing another configuration of AV/C Proxy Service Description which the 1394 proxy service of Fig. 3 has;
Fig. 18 is a diagram showing another configuration of AV/C nodes Service Description which the 1394 nodes service of Fig. 3 has;
Fig. 19 is a diagram showing another configuration of the device model;
Fig. 20 is a diagram showing a configuration of AV/C Proxy Device Description which a root device of Fig. 19 has;
Fig. 21 is a diagram showing a configuration of AV/C Proxy Device Description which the root device of Fig. 19 has;
Fig. 22 is a diagram showing a configuration of AV/C Proxy Service Description which a 1394 proxy service of Fig. 19 has;
Fig. 23 is a diagram showing a configuration of AV/C Node Service Description which an AV/C node service of Fig. 19 has;
Fig. 24 is a diagram showing a further configuration of device model;
Fig. 25 is a diagram showing a configuration of AV/C Proxy Device Description which a root device of Fig. 24 has;
Fig. 26 is a diagram showing a configuration of AV/C Proxy Service Description which an AV/C proxy service of Fig. 24 has;
Fig. 27 is a diagram showing a configuration of AV/C Node Service Description which an AV/C node service of Fig. 24 has;
Fig. 28 is a diagram showing a further configuration of device model;
Fig. 29 is a diagram showing a configuration of AV/C Proxy Device Description which a root device of Fig. 28 has;
Fig. 30 is a diagram showing a configuration of AV/C Proxy Device Description which the root device of Fig. 28 has;
Fig. 31 is a diagram showing a configuration of AV/C Proxy Service Description which an AV/C proxy service of Fig. 28 has;
Fig. 32 is a diagram showing a configuration of AV/C Node Service Description which an AV/C node service of Fig. 28 has; and
Fig. 33 is a diagram showing comparisons of device models.

### Best Mode for Carrying Out the Invention

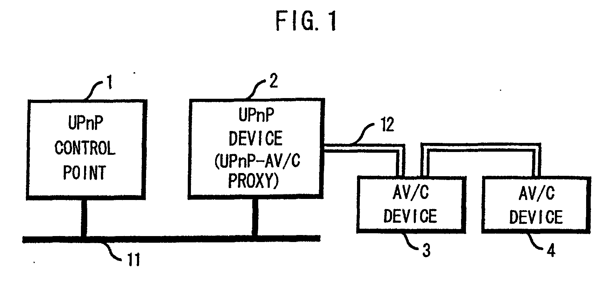

Fig. 1 shows the configuration of a network system to which the present invention is applied. In the configuration, a UPnP control point 1 is connected with an IEEE 802 network 11. AV/C devices 3, 4 are connected with an IEEE 1394 network 12. The IEEE 802 network 11 and the IEEE 1394 network 12 are both connected with a UPnP device (UPnP-AV/C proxy) 2.

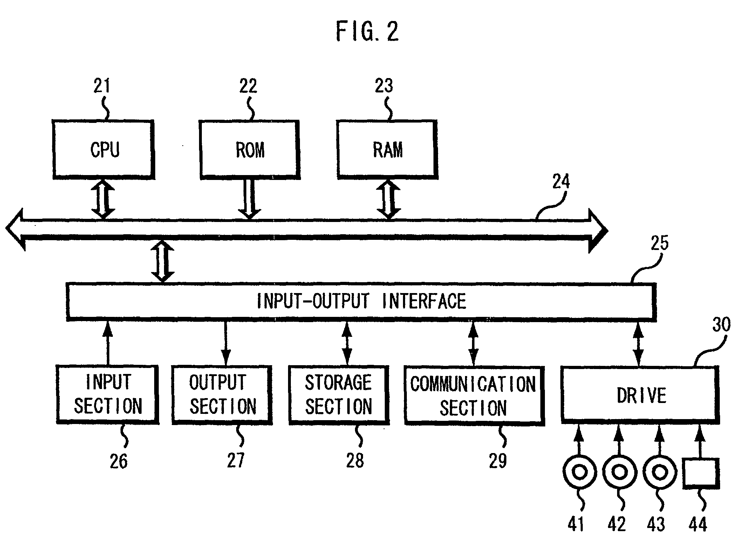

Fig. 2 shows an example of the configuration of the UPnP device 2. In Fig. 2, a central processing unit (CPU) 21 executes various processes in conformity with a program stored in a read only memory (ROM) 22, or a program load on a random access memory (RAM) 23 from a storage section 28. The data and the like which are necessary for the CPU 21 to execute various processes are also properly stored in the RAM 23.

The CPU 21, the ROM 22 and the RAM 23 are mutually connected through a bus 24. An input-output interface 25 is also connected with the bus 24.

To the input-output interface 25 there are connected an input section 26 composed of a keyboard, a mouse and the like; an output section 27 composed of a display, such as a CRT and an LCD, a speaker and the like; a storage section 28 composed of a hard disk and the like; and a communication section 29 composed of a modem, a terminal adapter and the like. The communication section 29 performs communication processes through the IEEE 802 network 11 or the IEEE 1394 network 12.

A drive 30 is also connected with the input-output interface 25 as the need arises, and a magnetic disk 41, an optical disk 42, a magneto-optical disk 43, a semiconductor memory 44 and the like are suitably connected thereto. Then, computer programs read out from them are installed into the storage section 28 as a need arises.

UPnP devices (the UPnP control point 1 and the UPnP device 2 in case of the example of Fig. 1) mainly have six functions of Addressing, Discovery, Description, Control, Eventing and Presentation.

Addressing is a function by which each UPnP device acquires an address on the IEEE 802 network 11, and Dynamic Host Configuration Protocol (DHCP) or Auto IP is used therefor.

Discovery is performed after Addressing, and the UPnP control point 1 can find a target device which the UPnP control point 1 wants to control by means of Discovery. The protocol used here is Simple Service Discovery Protocol (SSDP). When each device is connected with the IEEE 802 network 11, the device multicasts a message notifying a device and a service which the device includes in itself on the IEEE 802 network 11 (namely, the devices transmits a packet without specifically designating the destination of the packet). By receiving the multicast message, the UPnP control point 1 can know which device has been connected with the IEEE 802 network 11.

On the contrary, it is also possible for the UPnP control point 1 to examine the devices connected with the IEEE 802 network 11 at the present time. At this time, the UPnP control point 1 multicasts a retrieval command on the IEEE 802 network 11 by the use of the device or the service which are wanted to be discovered as key words. If each device connected with the IEEE 802 network 11 fits the conditions prescribed in the multicast retrieval command, the device performs the unicast of a response to the retrieval command (namely, the device transmits a packet by designating a destination). Thereby, the UPnP control point 1 can detect a device connected with the IEEE 802 network 11.

Moreover, when each device are disconnected the IEEE 802 network 11, the device broadcasts the fact in advance.

With the Discovery, the uniform resource locator (URL) of Device Description is described in an SSDP packet output by the device being an object of control and discovered by the UPnP control point 1. The UPnP control point 1 is enabled to obtain further detailed device information of the device from Device Description by accessing the URL. The device information includes icon information, a model name, a manufacturer name, product name and the like.

Ina addtion, the device information describes the service information which the device has. Service Description in which the detailed information of the service is described can also be traced on the basis of the URL described in the service information.

The UPnP control point 1 is enabled to know how to access to a target on the basis of the device information (Device Description) and the service information (Service Description).

Moreover, in the Device Description, a Presentation URL, which will be described later, is described.

The Device Description and Service Description are expressed by Extensible Markup Language (XML).

Control is classified to two large groups of Action and Query. Action is performed in conformity with a method prescribed in action information of Service Description, and the UPnP control point 1 can handle a target by invoking Action.

On the other hand, Query is used for capturing the value of stateVariable of Service Description. The value of stateVariable indicates the state of a device.

In Control, a transport protocol called as Simple Object Access Protocol (SOAP) is used. As the representation language of SOAP, XML is used.

Eventing is used for making a target notify the UPnP control point 1 of an alteration of the value of stateVariable when the alteration is performed. The UPnP control point 1 can know the variables held by the target on the basis of stateVariable by analyzing Service Description. By having output Subscription to the target, the UPnP control point 1 can receive a notice from the target when a variable has changed in respect of the variables to which sendEvents are yes among the variables. In Eventing, a transport protocol called as General Event Notice Architecture (GENA) is used. As the representation language of the protocol, XML is used.

Presentation is used for supplying control means using a user interface (UI) to a user. By accessing Presentation URL described in Device Description, a user can obtain Presentation Page described with Hyper Text Markup Language (HTML). By means of the function, a target can prepare an application.

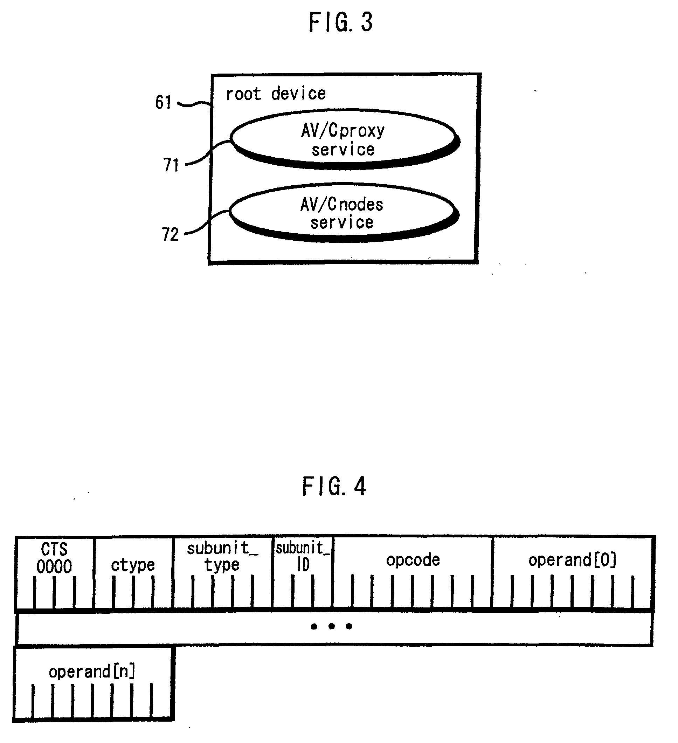

The UPnP device (UPnP-AV/C proxy) 2 functions as a bridge between the IEEE 802 network 11 and the IEEE 1394 network 12, and provided with a device model shown in Fig. 3 in its inside. The device model in the example is composed of one root device 61. The root device 61 includes an AV/C proxy service 71 and an AV/C nodes service 72.

The AV/C proxy service (hereinafter referred to simply as "proxy service" ) 71 manages bus reset generation of the IEEE 1394 network 12, bus ID, the number of nodes, bus managers, the node unique ID (NUID) of isochronous resource managers, gap counts (Gap Count), self ID packets (Self ID packets) and the like.

The AV/C nodes service (hereinafter referred to simply as "node service") 72 performs a conversion process between a command based on SOAP and a command based on AV/C.

Fig. 4 shows a format of an AV/C command frame.

In the CTS field, the type of a command set is described. The value "0000" in the field indicates that the command set is an AV/C command set.

In a ctype field, it is described whether the packet is a command or a response. And, if the packet is a command, the function classification of the command is described therein and, if the packet is a response, the classification of a process result of a command is described.

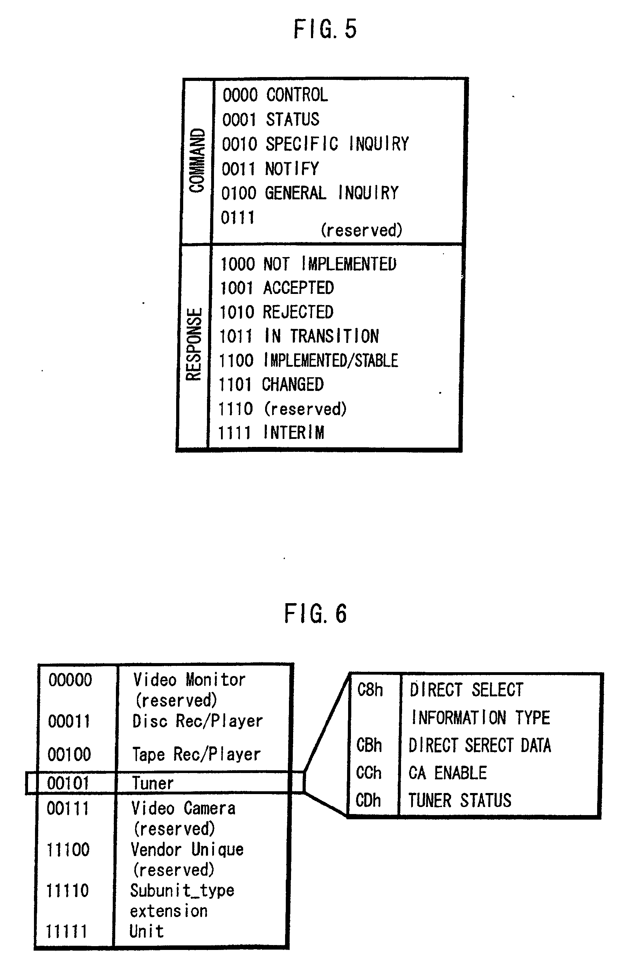

Fig. 5 shows examples of such commands and responses. As shown in the figure, four kinds of commands are prepared as large command groups.

CONTROL (ctype = 0000) is a command for controlling a function from the outside.

STATUS (ctype = 0001) is a command for inquiring a state from the outside.

Moreover, GENERAL INQUIRY (ctype = 0100) and SPECIFIC INQUIRY (ctype = 0010) exist as commands for inquiring the existence of the support of a control command from the outside. The former is a command for inquiring the existence of an opcode support, and the latter is a command for inquiring the existence of the supports of opcodes and operands.

NOTIFY (ctype = 0011) is a command for requesting to notify the outside of a change of a state.

Responses are returned according to the kinds of commands.

As responses to the CONTROL commands, the following responses are prepared.

NOT IMPLEMENTED (ctype = 1000) notifies that no commands are implemented. ACCEPTED (ctype = 1001) notifies that a command has been executed. REJECTED (ctype = 1010) notifies that a command could not be executed.

INTERIM (ctype = 1111) notifies that a command is in process.

As responses to a STATUS command, IN TRANSITION and STABLE exist in addition to NOT IMPLEMENTED and REJECTED.

IN TRANSITION (ctype = 1011) notifies that a status is transiting. STABLE notifies that a status is not transiting and is stable.

As responses to the GENERAL INQUIRY command and the SPECIFIC INQUIRY command, IMPLEMENTED and NOT IMPLEMENTED exist. IMPLEMENTED (ctype = 1100) notifies that a command is implemented.

As a response to the NOTIFY command, NOT IMPLEMENTED, REJECTED, INTERIM and CHANGED exist.

INTERIM first notifies that NOTIFY has been accepted. CHANGED (ctype = 1101) notifies that the state of a target has changed after that.

"subunit_type" in the AV/C command frame of Fig. 4 indicates a destination of a command. A concrete example of the subnit_type is shown in Fig. 6.

That is, the value "00000" of subunit_type indicates that the destination (sub-unit) of the AV/C command is Video Monitor. Moreover, the value "00101" indicates that the destination is Tuner.

The value "11111" of subunit_type indicates that the command is addressed to a unit. As a result, for example, the turning on and the turning off of the power source of an apparatus are controlled.

Next to subunit_type of Fig. 4, subunit_ID is arranged. "subunit_ID" is used as a discrimination number for performing the discrimination in the case where a plurality of sub-units of the same kind exists in a unit. Consequently, the destination of a command is determined on the basis of both of subunit_type and subunit_ID after all.

An opcode indicates an command operation, and an operand indicates an additional condition of an command.

Fig. 6 shows an example of the opcode in the case where scbunit_type is Tuner. In case of the opcode of Tuner, the value C8h thereof indicates DIRECT SELECT INFORMATION TYPE, and the value CBh thereof indicates DIRECT SELECT DATA.

By such a way, a table of opcodes is prepared for each subunit. Moreover, an operand is defined to each opcode.

For example, in case of performing cannel selection of a tuner, the opcode in the case is selected to be DIRECT SELECT INFORMATION TYPE, and the parameters of the channel such as the frequency thereof and the channel number thereof are designated by the operand.

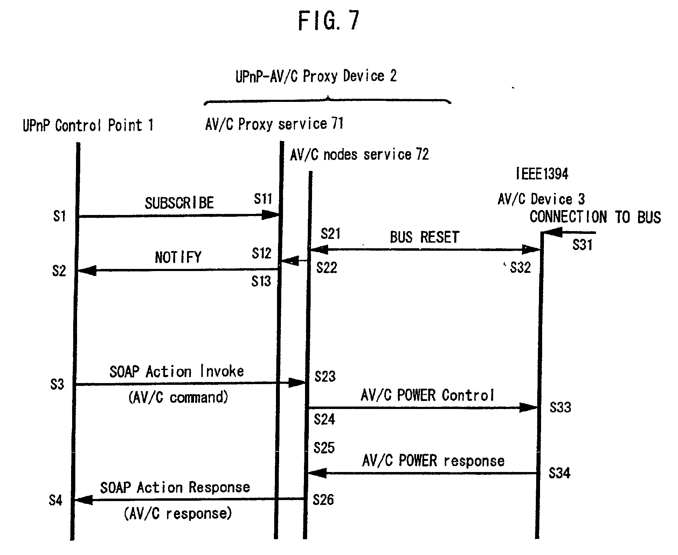

Next, the flow chart of Fig. 7 is referred while the process in which the UPnP control point 1 connected to the IEEE 802 network 11 controls a device connected to the IEEE 1394 network 12 is described by taking the case where the power supply of the AV/C device 3 is turned on as an example.

At Step S1 the UPnP control point 1 subscribes to the proxy service 71 of the root device 61 constituting the UPnP-AV/C proxy 2 that, when some changes occur in the IEEE 1394 network 12, the proxy service 71 should notify the UPnP control point 1 of the changes (SUBSCRIBE). At Step S11, when the proxy service 71 receives SUBSCRIBE, the proxy service 71 executes a process corresponding to it.

For example, if it is supposed now that the AV/C device 3 is connected with the IEEE 1394 network 12 at Step S31, a bus reset is generated in the AV/C device 3 at Step S32, and in a similar way a bus reset is generated in the nodes service 72 in the root device 61 at Step S21. At this time, the nodes service 72 notifies the proxy service 71 of the generation of the bus reset at Step S22.

When the proxy service 71 detects the notice from the nodes service 72 at Step S12, the proxy service 71 notifies the UPnP control point 1 that the AV/C device 3 has been connected with the IEEE 1394 network 12 at Step S13 on the basis of SUBSCRIBE from the UPnP control point 1, which the proxy service 71 has taken in at Step S11, (NOTIFY).

At Step S2, the UPnP control point 1 receives the notice from the proxy service 71. Thereby, the UPnP control point 1 can know that the AV/C device 3 has been connected with the IEEE 1394 network 12.

Accordingly, at Step S3, the UPnP control point 1 invokes a request packet of an action based on SOAP which describes a command for controlling a prescribed action of the AV/C device 3 (the turning on of the power supply of the AV/C device 3 in the present case) (Invoke).

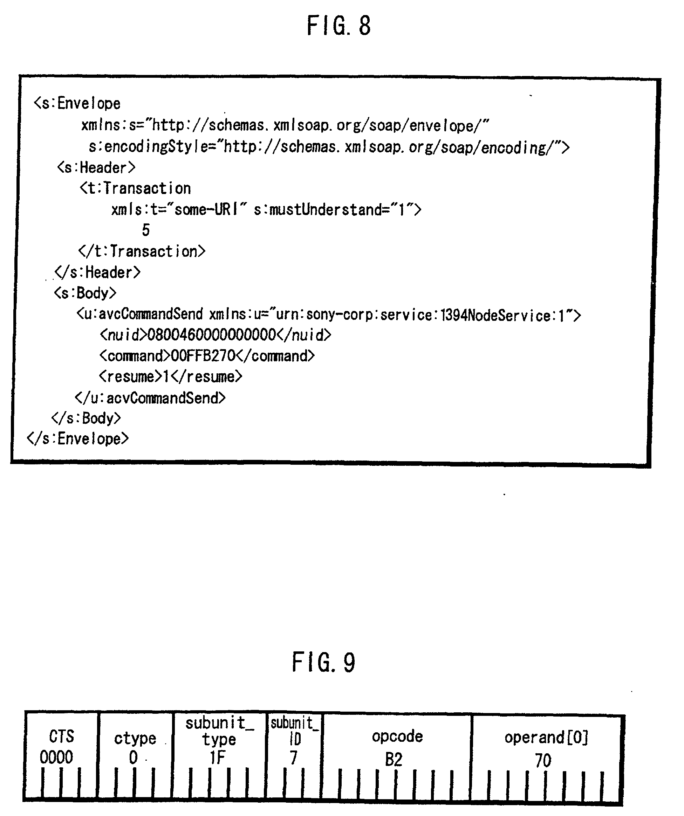

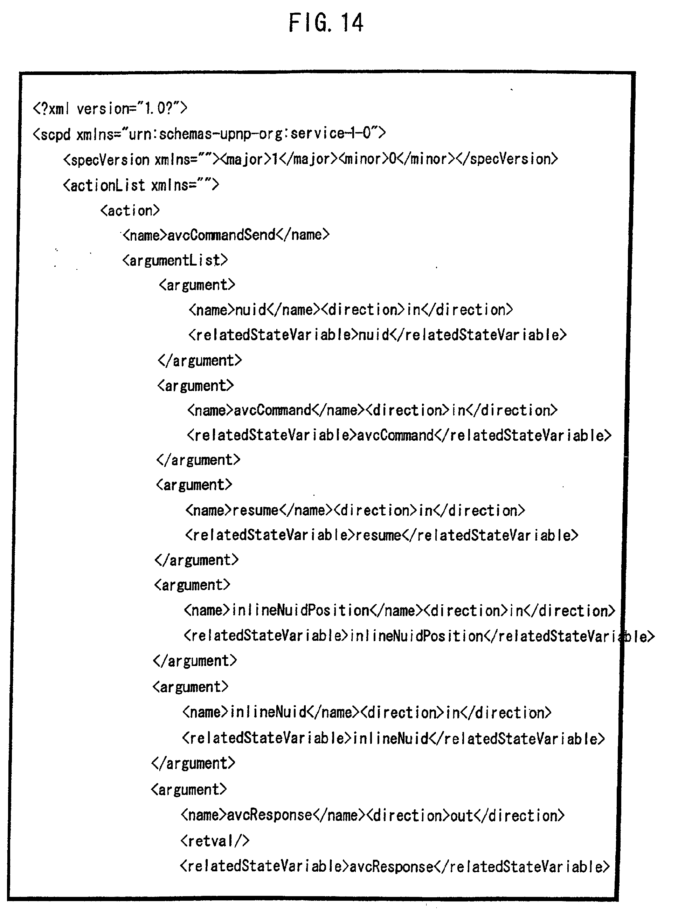

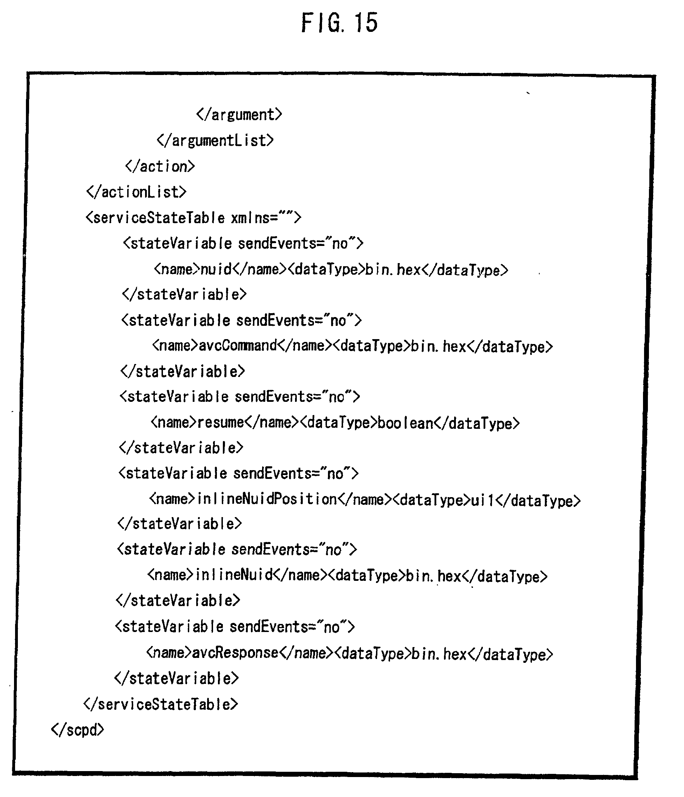

Fig. 8 shows an example of a message transferred from the UPnP control point 1 to the nodes service 72. The UPnP control point 1 makes the message by referring to AV/C Nodes Service Description, which the nodes service 72 includes and is shown in Fig. 14 and Fig. 15, which will be described later.

The numeral "5" included in Transaction indicates a transaction label as a label for recognizing which command a returned response corresponds to because responses are returned corresponding to commands.

"nuid" included in Body indicates the node unique ID (NUID) of the transmission destination of the message. In the case of the present example, nuid indicates the NUID "0800460000000000" of the AV/C device 3. The NUID is one which is described in the notice acquired from the proxy service 71 at the process of Step S2.

The command "00FFB270" indicates the contents of an AV/C command by which the UPnP control point 1 requests the nodes service 72 to generate the AV/C command.

"00FF" (hexadecimal number) included on the MSB side of the command corresponds to CTS "0000", ctype "0000", subunit_type "11111" and subunit_ID "111" in an AV/C POWER control command (binary number) which is generated by the nodes service 72 and shown in Fig. 9. That is, if the hexadecimal number "00FF" is expressed by a binary number, the binary number is "0000000011111111".

The next "B2" corresponds to an opcode, and "70" corresponds to an operand.

The resume "1" is a command of requesting the AV/C nodes service 72 to resend a response corresponding to the command in the case where a bus reset has occurred in the device to which the AV/C device 3 is connected. If the nodes service 72 has received the request, the nodes service 72 performs the process of resending the response corresponding to the command when the nodes service 72 detects the bus reset.

"avcCommandSend" is a command requesting the nodes service 72 to output such a command as an AV/C command to the IEEE 1394 network 12.

Because all of the values indicating the contents of the commands are expressed by means of a text, it is possible to describe any kind of AV/C commands.

Returning to Fig. 7, when the nodes service 72 receives at Step S23 the Action Invoke shown in Fig 8, the nodes service 72 generates an AV/C command (AV/C POWER control command) shown in Fig. 9 corresponding to Action Invoke, and transmits the generated AV/C command to the AV/C device 3 through the IEEE 1394 network 12 at Step S24.

The AV/C nodes service 72 has generated and keeps a correspondence table of NUID and node ID, and updates them at every bus reset generation. NUID is converted to node ID on the basis of the correspondence table, and is transferred into the IEEE 1394 network 12.

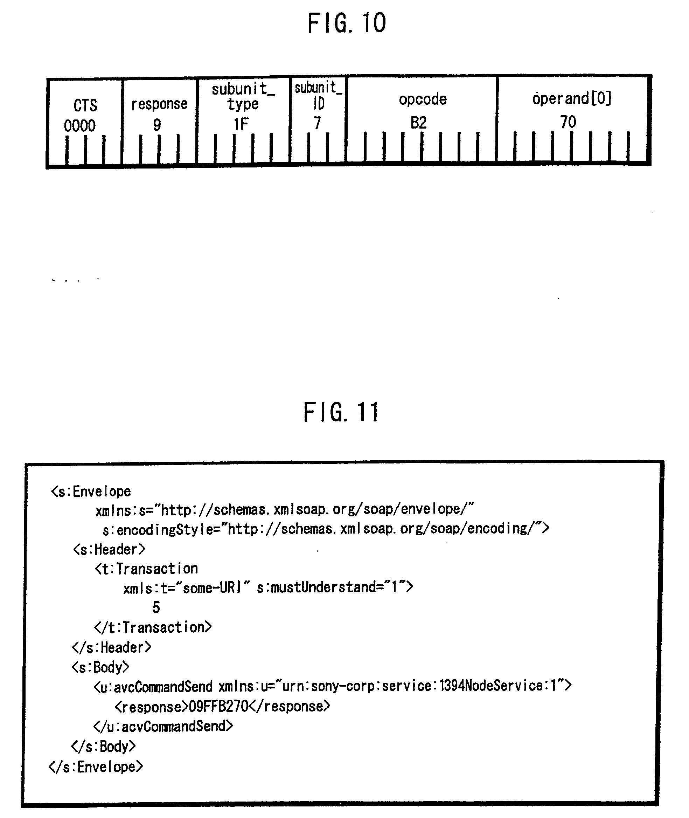

When the AV/C device 3 receives the AV/C POWER control command transmitted from the node device 72 at Step S33, the AV/C device 3 turns on the apparatus corresponding to the contents of the command. After that, at Step 534, the AV/C device 3 generates an AV/C response (AV/C POWER response) which corresponds to the turning on of the apparatus and is shown in Fig. 10, and transmits to the nodes service 72.

As shown in Fig. 10, CTS is set to be "0000" in a similar way to the AV/C POWER control command of Fig. 9. "response" is set to the value 9 (1001) indicating ACCEPTED as shown in Fig. 5.

"subunit_type" and "subunit_ID" are set to be the same values as those of the AV/C POWER control command of Fig. 9. That is, in this case, the values indicate the origin of the transmission.

The opcode and the operand are also set to have the same values as those of the AV/C POWER control command of Fig. 9.

When the nodes service 72 receives the AV/C POWER response transmitted form the AV/C device 3 at Step S25, the nodes service 72 generates Response as Action, which is based on an SOAP protocol and is shown in Fig. 11, and transmits the generated Action Response to the UPnP control point 1 at Step S26.

The numeral "5" shown in Transaction shown in Fig. 11 is set to be "5" (the same value) corresponding to the value "5" of Transaction in Fig. 8 for indicating that Action Response is Action (Response) forming a counterpart to Action (Command) of Fig. 8.

When the AV/C device 3 receives the command, the AV/C device 3 turns the power supply of the apparatus corresponding to the command, and generates the AV/C POWER response shown in Fig. 10 and transmits the generated AV/C POWER response to the nodes service 72 at Step S34.

The nodes service 72 generates and keeps a table (correspondence table) for keeping the correspondence relationship of Transaction. That is, when the nodes service 72 receives the AV/C POWER control command shown in Fig. 8 at Step S23 and outputs the AV/C POWER control command shown in Fig. 9 at Step S24, the nodes service 72 stores it in the table that both of the AV/C POWER control commands correspond to each other. Consequently, by referring to the table, the nodes service 72 can recognize that, when the AV/C POWER response shown in Fig. 10 is transmitted from the AV/C device 3, it is a response corresponding to the AV/C POWER control command shown in Fig. 8.

And, when the nodes service 72 receives the AV/C POWER response at Step S25, the nodes service 72 generates a response of an action which is shown in Fig. 11 and is based on SOAP, and transmits the generated Action Response to the UPnP control 1 at Step S26.

The response "09FFB270" corresponds to the value "00001001111111111010001001110000" of the binary number described in the AV/C POWER response of Fig. 10.

The UPnP control point 1 receives the response at Step S4. Thereby, the UPnP control point 1 can know that the AV/C device 3 has turned the power supply of the apparatus on.

According to the provisions of AV/C, it is prescribed that an AV/C device shall return INTERIM as a response when the AV/C device cannot execute the process corresponding to a received request immediately. When the AV/C device has completed the process corresponding to the request after that, the AV/C device shall return a final response to the transmitter of the request at the point of time.

However, the period of time from the reception of the request to the returning of the final response is not prescribed. Accordingly, the nodes service 72 manages the period of time from the output of the AV/C command to the AV/C device 3 in the process at Step S24 to the reception of the AV/C response from the AV/C device 3 in the process at Step S25. If a response received within a prescribed period of time which has been set previously (e.g. 30 seconds) is not INTERIM (in case of a final response), the AV/C nodes service 72 immediately transfers a response corresponding to the received response to the UPnP control point 1.

On the contrary, if the received response is INTERIM, the AV/C nodes service 72 waits until 30 seconds have passed from the transmission of the AV/C command. And, when the response other than INTERIM (final response) is received before the period of time of 30 seconds has passed, the AV/C nodes service 72 outputs a response corresponding to the final response. When the final response is not received within 30 seconds, the AV/C nodes service 72 outputs INTERIM as a response. Thereby, the UPnP control point 1 can know at least within 30 seconds whether the requested process can be completed or not.

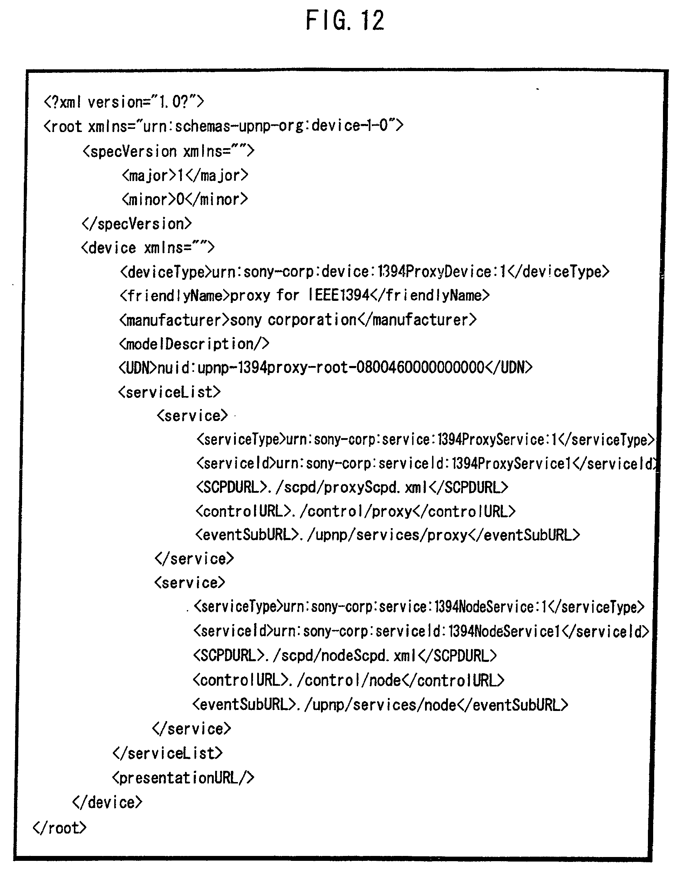

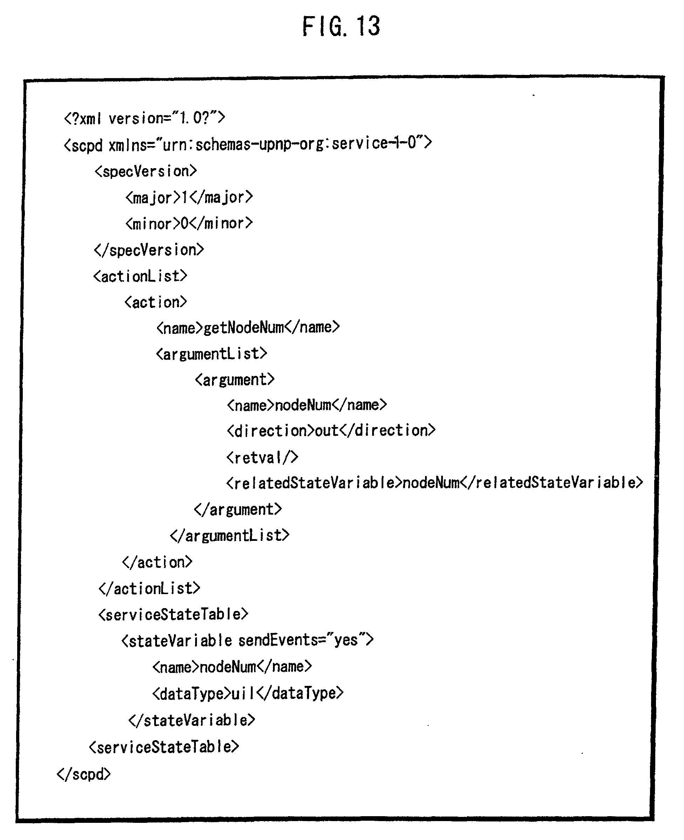

For executing the above-mentioned process, the root device 61 of the device model, which is shown in Fig. 3 and the UPnP-AV/C proxy 2 has, includes AV/C Proxy Device Description shown in Fig. 12; the proxy service 71 includes AV/C Proxy Service Description shown in Fig. 13; and the nodes service 72 includes AV/C nodes Service Description shown in Figs. 14 and 15.

These Description's describe parameters and other conditions necessary for executing the functions which the devices have. When another device requests the devices to execute the functions, the other device refers to Description's to add the conditions described in Description's, and then the other device transmits a command to the devices.

### "deviceType"

"urn:sony-corp:device:1394ProxyDev ice:1" in Fig. 12 indicates the type of the root device 61. FriendlyName "proxy for IEEE1394" indicates a friendly name of the root device 61.

### UDN

"nuid:upnp-1394proxy-root-0800460000000000" indicates the peculiar number of the root device 61.

In the example, two services of the proxy service 71 and the nodes service 72 are prescribed.

In one service of them, ServiceType "urn:sony-corp:service:1394ProxyService:1" indicates that the type of the service of the proxy service 71 is Proxy Service, and service ID
"urn:sony-corp:ServiceId:1394ProxyService1" indicates the peculiar name of the proxy service 71.

SCPDURL "./scpd/proxyScpd.xml" indicates the URL of AV/C Proxy Service Description, which the proxy service 71 includes, (concretely, the URL of AV/C Proxy Service Description shown in Fig. 13).

Moreover, the other ServiceType "urn:sony-corp:service:1394NodeService:1" indicates that the type of the service of the nodes service 72 is NodeService. SCPDURL "./scpd/nodeScpd.xml" of the service indicates the URL of AV/C nodes Service Description, which the nodes service 72 has, (concretely, AV/C nodes Service Description shown in Fig. 14 and Fig. 15).

"action" in AV/C Proxy Service Description of Fig. 13 indicates various actions which the proxy service 71 executes. "name" "getNodeNum" indicates the name of an action. The "action" is an action for acquiring the number of nodes on the IEEE 1394 network 12.

With regard to the "action" of "getNodeNum", the direction of the name of "nodeNum" includes an argument of "out" (an argument in which another device put a value to output the argument to the proxy service 71).

And, an association of a variable to be stored in the argument of "nodeNum" is prescribed in serviceStateTable. That is, the variable is a variable which is notified to a device during SUBSCRIBE when a state variable has changed. The type of the variable is set to "ui1"

AV/C nodes Service Description of Fig. 14 and Fig. 15 prescribes "avcCommandSend" being an action for sending an AV/C command. The command includes arguments of "nuid", "avcCommand", "resume", "inlineNuidPosition", "inlineNuid" and "avcResponse". Because the direction is "out", the last "avcResponse" is output from another device to be sent to the nodes service 72. On the contrary, because the directions of five arguments except "avcResponse" are set to be "in", their values are set therein, and the nodes service 72 issues the arguments to input them to other devices.

The associations of all of the six arguments are described in serviceStatTable.

These arguments are produced when stateVariable sendEventes is no (in the case where the variables have not changed), and the shapes of the variables of all of "nuid", "avcCommand", "inlineNuid" and "avcResponce" are set to be "bin.hex". The shape of the variable of "resume" is set to be "boolean", and the shape of the variable of "inlineNuidPosition" is set to be "ui1".

"inilineNuid" (inserted NUID) and " inlineNuidPosition" (insertion position of NUID) in Fig. 14 are used in the case where NUID other than the NUID of the destination device is designated (i.e. they are used in the case where the command needs the NUID of another AV/C device).

The UPnP control point 1 sends a request in accordance with Description. Accordingly, the AV/C device which has received a request interprets the request on the basis of the provisions of Description, and thereby the AV/C device can detect NUID.

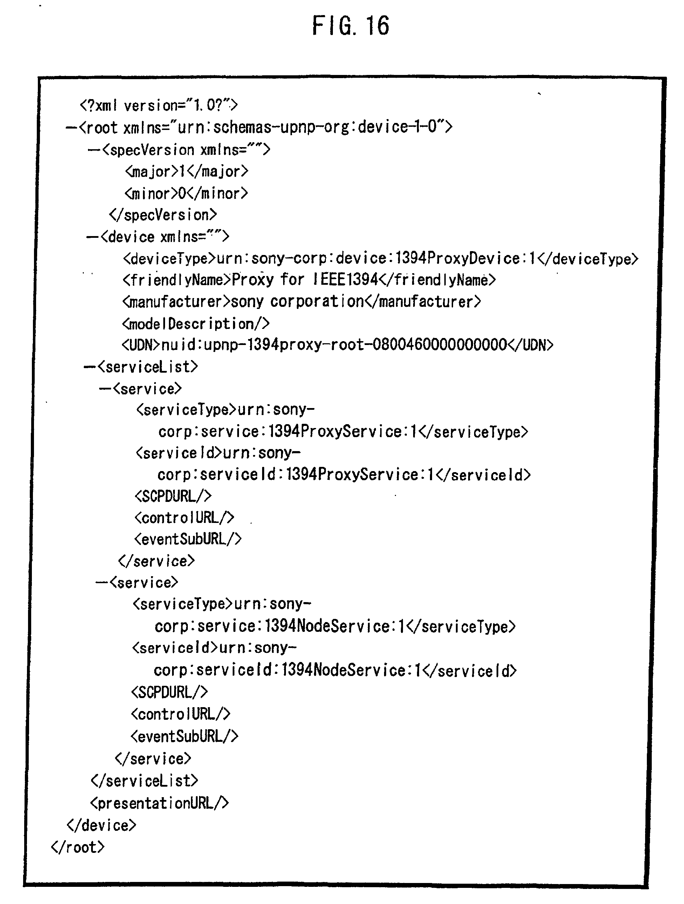

Fig. 16 shows another example of AV/C Proxy Device Description which the root device 61 has. In the example also, ServiceType "urn:sony-corp:service:1394Proxy Service:1" of the proxy service 71 and ServiceType "urn:sony-corp:1394Node Service:1" of the nodes service 72 are described.

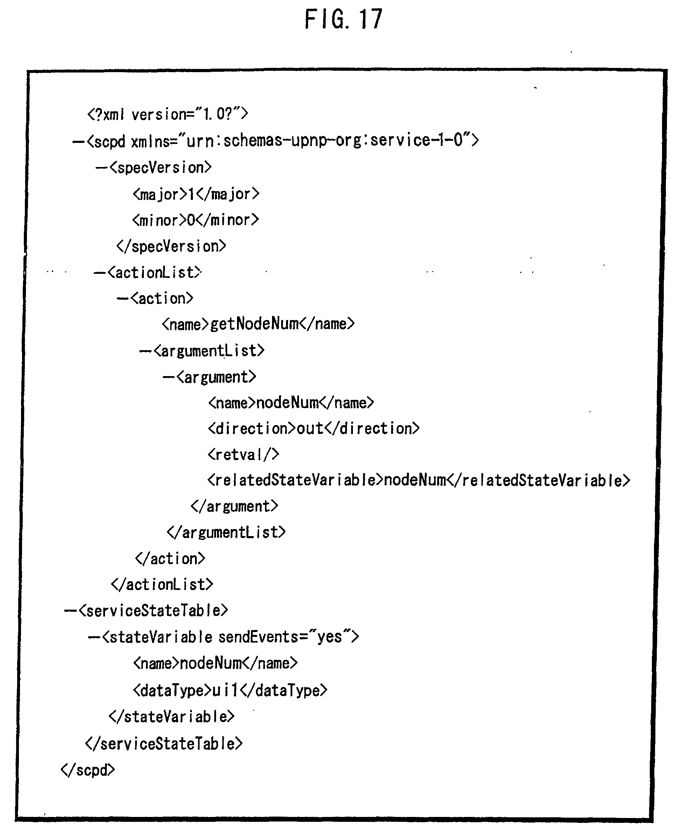

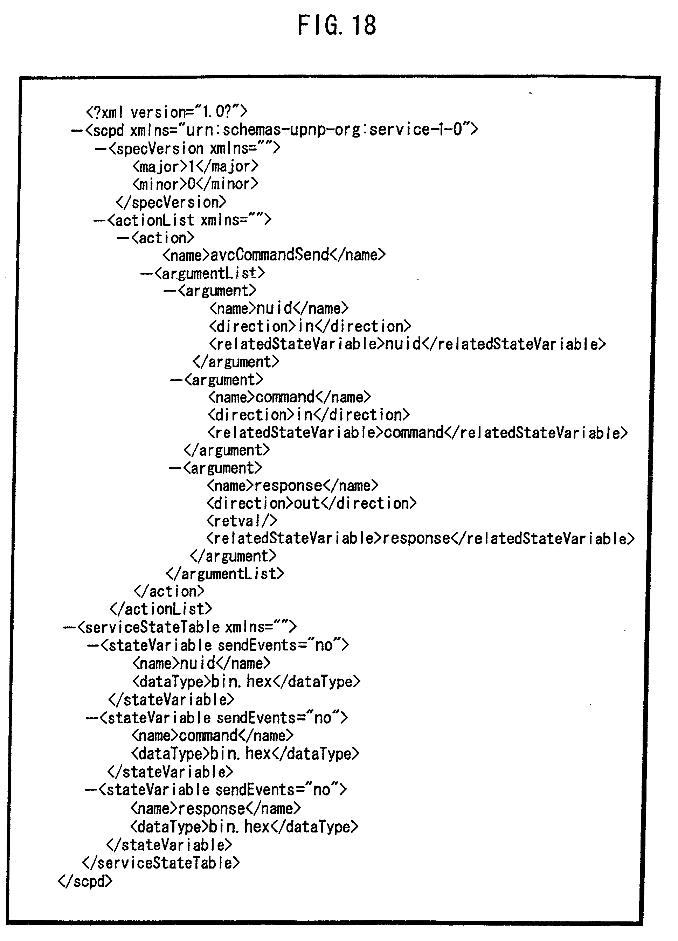

Although illustration is omitted in Fig. 16, the URL of AV/C Proxy Service Description in Fig. 17 is described in SCPDURL of serviceId "urn:sony-corp:serviceId:1394ProxyService1". More over, the URL of AV/C NodesServiceDescripiton of Fig. 18 is described in SCPDURL of serviceId "urn:sony-corp:serviceId:1394NodeService1".

Fig. 17 shows another example of AV/C Proxy Service Description which the proxy service 71 has.

In the example of Fig. 17, the action of the name of "getNodeNum" for acquiring the number of nodes is described.

In a similar way, Fig. 18 shows another example of AV/C Nodes Service Description which the nodes service 72 has.

In the example of Fig. 18, the action of "avcCommandSend" for sending an AV/C command is prescribed to have three arguments of "nuid", "command" and "response".

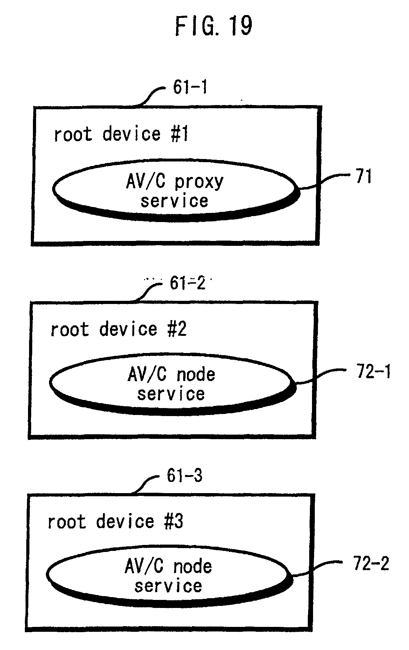

Although one root device 61 is made to hold the proxy service 71 and the nodes service 72 as shown in Fig. 3 in the above, it is also possible to make a root device 61-1 hold the proxy service 71 and to define the service to each node on the IEEE 1394 network 12 at every root device as shown in Fig. 19, for example. In the example of Fig. 19, a nodes service 72-1 is held by a root device 61-2, and a nodes service 72-2 is held by a root device 61-3.

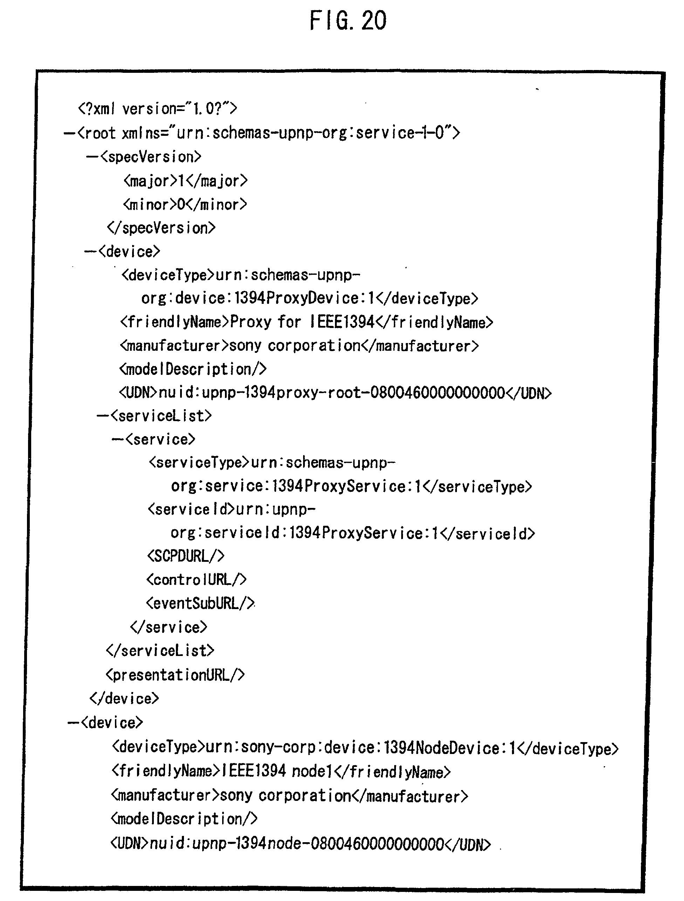

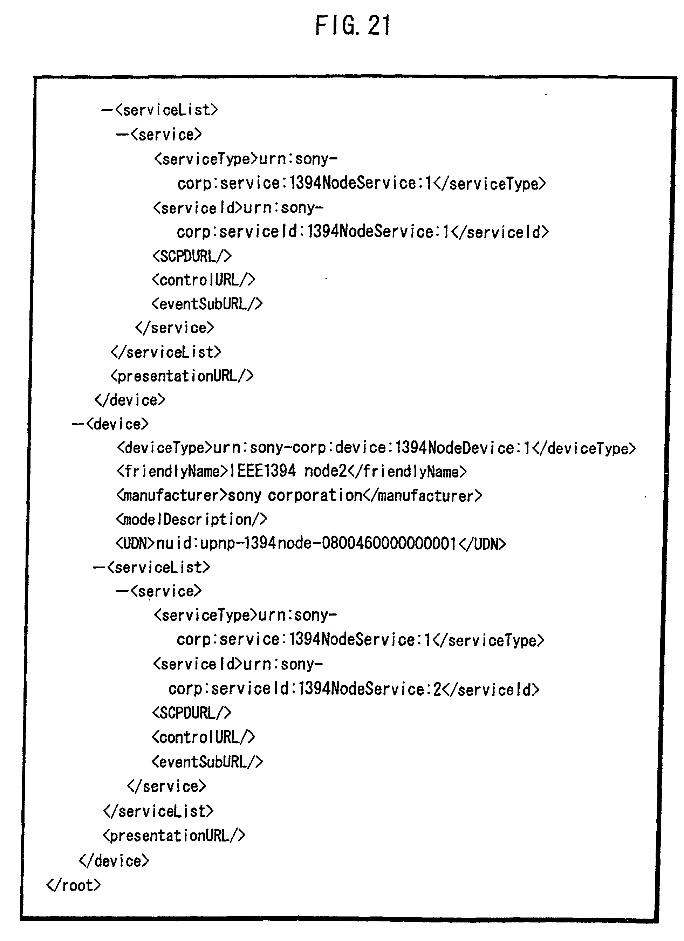

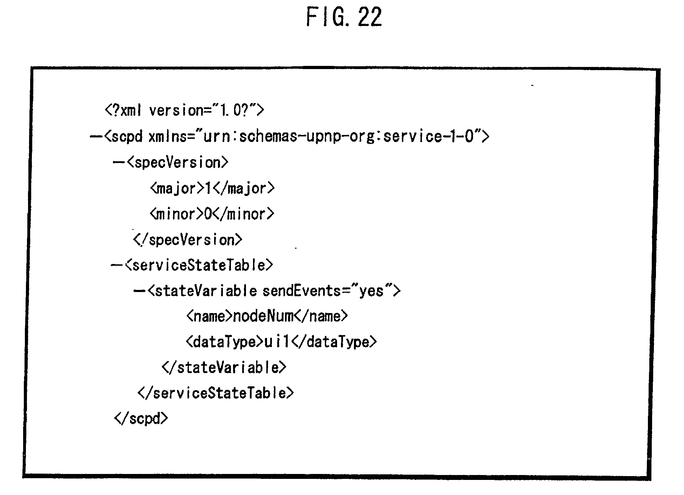

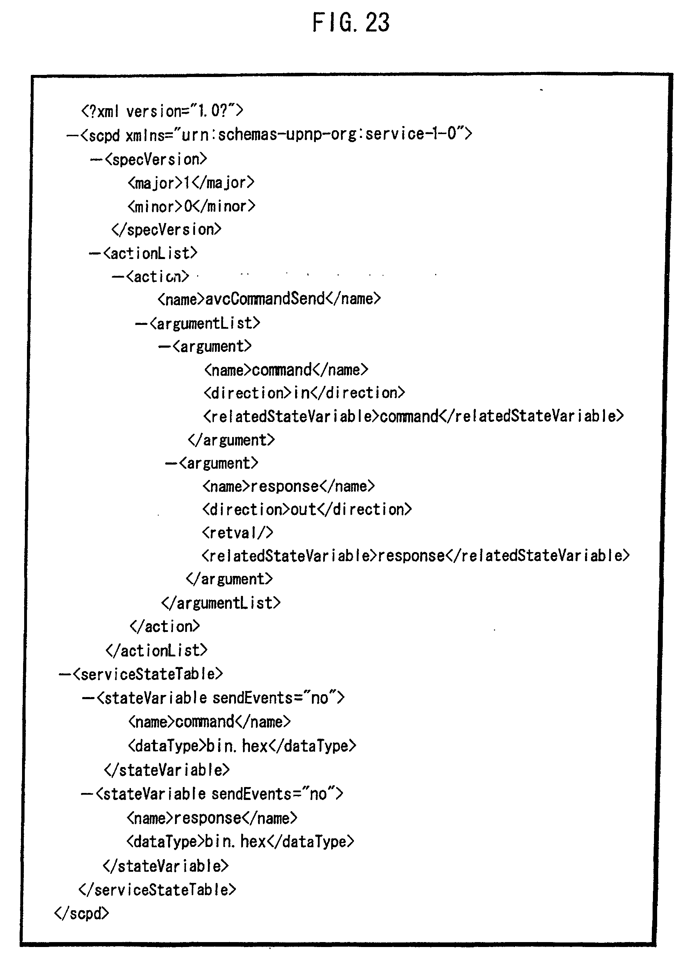

Fig. 20 and Fig. 21 show examples of AV/C Proxy Device Description which the root devices 61-1 to 61-3 of Fig. 19 have. Fig. 22 shows an example of AV/C Proxy Service Description which the proxy service 71 of Fig. 19 has. Fig. 23 shows an example of AV/C Node Service Description which the nodes services 72-1, 72-2 of Fig. 19 have.

In the examples of Figs. 20 and 21, deviceType
"urn:schemas-upnp-org:device:1394ProxyDevice: 1" is described corresponding to the root device 61-1; deviceType "urn:sony-corp:device:1394NodeDevice:1" is described corresponding to the root device 61-2; and deviceType "urn:sony-corp:device:1394NodeDevice:1" is described corresponding to the root device 61-3.

Although illustration is omitted, the URL of AV/C Proxy Service Description of Fig. 22 is described in SCPDURL of deviceType "urn:schemas-upnp-org:device:1394ProxyDevice: 1"; and URL of AV/C nodes Service Description of Fig. 23 is described in SCPDURL of deviceType "urn:sony-corp:device:1394ProxyDevice:1" and deviceType
"urn:sony-corp:device:1394NodeDevice:1" severally.

In Fig. 22, the definition of the variable of "nodeNum" is performed in serviceStateTable. The definition of the variable can be investigated by means of Query.

In Fig. 23, "avcCommandSend" being an action for sending an AV/C command is described.

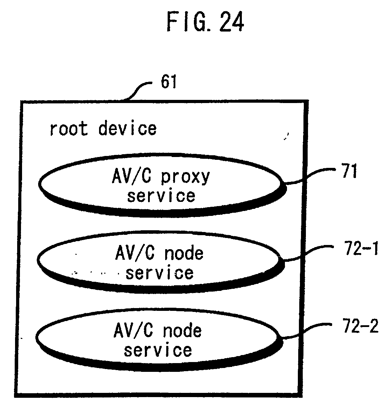

Fig. 24 shows a further configuration example of the device models. In the example, the nodes services 72-1, 72-2 are provided in every node like in the example of Fig. 19. However, the example of Fig. 24 differs the example of Fig. 19 in the fact that all of the services are held in one root device 61 together with the proxy service 71.

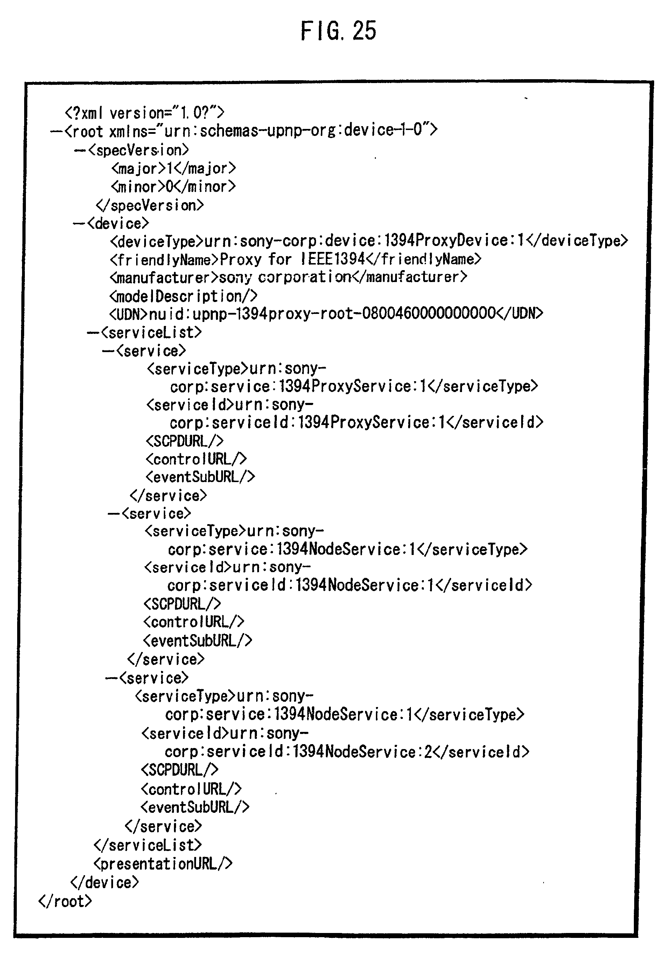

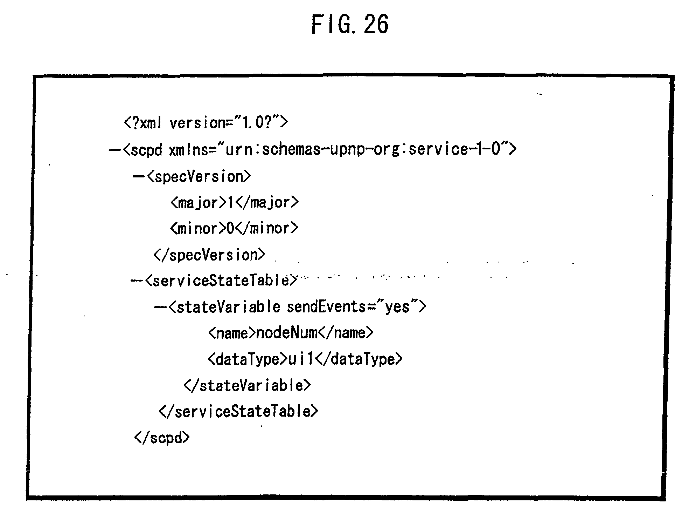

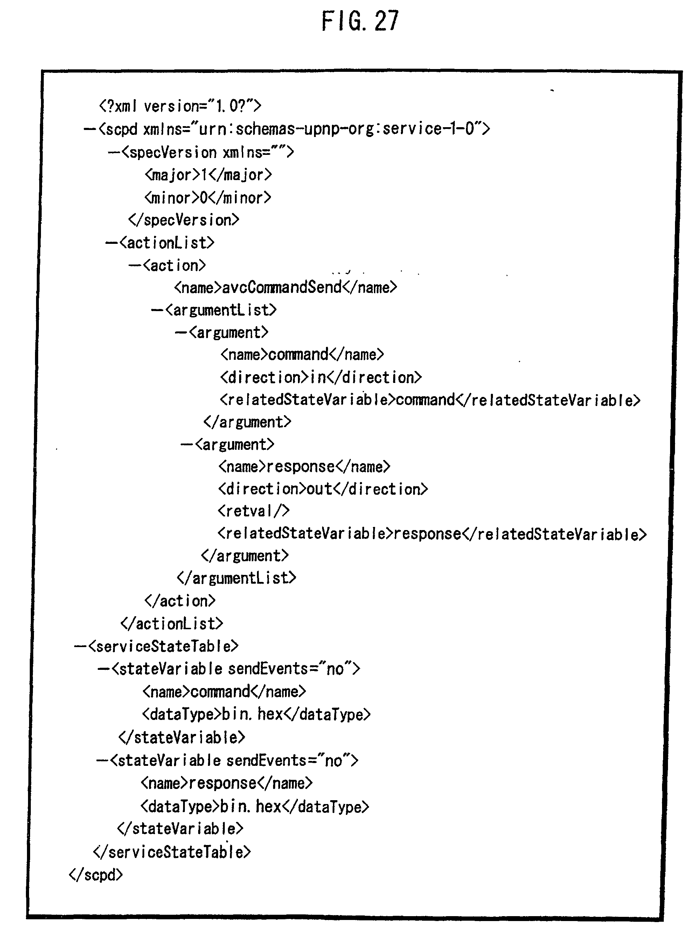

Fig. 25 shows the configuration of AV/C Proxy Device Description which the root device 61 in the example of Fig. 24 has. Fig. 26 shows a configuration example of AV/C Proxy service Description which the proxy service 71 of Fig. 24 has. Fig. 27 shows a configuration example of AV/C Node Service Description which the nodes services 72-1, 72-2 of Fig. 24 have.

In the example of Fig. 25, three services are prescribed. The URL of AV/C Proxy Service Description of Fig. 26 is described in SCPDURL of serviceId "urn:sony-corp:serviceId:1394ProxyServicel". The URL of AV/C Node Service Description of Fig. 27 is described in SPCDURL's of serviceId's of "urn:sony-corp:serviceId:1394NodeServicel" and "urn:sony-corp:serviceId:1394NodeService2".

In the example of Fig. 26, the variable of "nodeNum" is prescribed.

In the example of Fig. 27, an action for sending an AV/C command is prescribed.

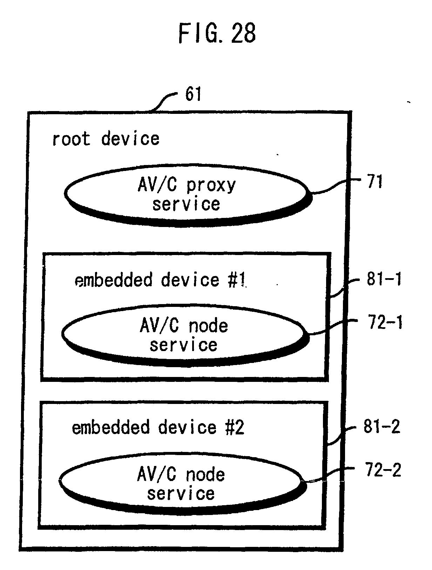

Fig. 28 shows a still further configuration example of the device model. In the configuration example, the proxy service 71 is held in the root device 61. Moreover, the nodes services 72-1, 72-2 are provided at every node, and further are held in embedded devices 81-1, 81-2 formed in the root device 61, respectively.

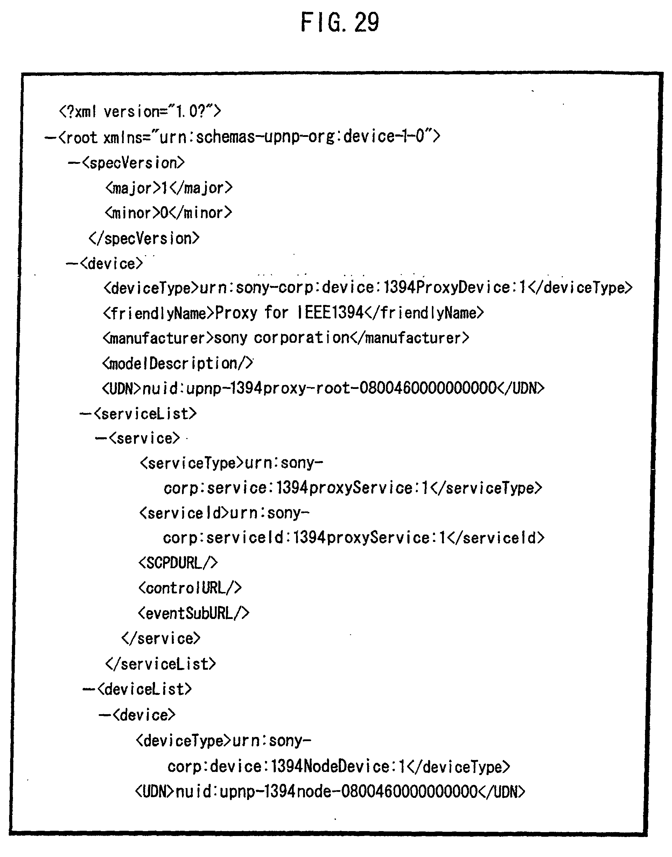

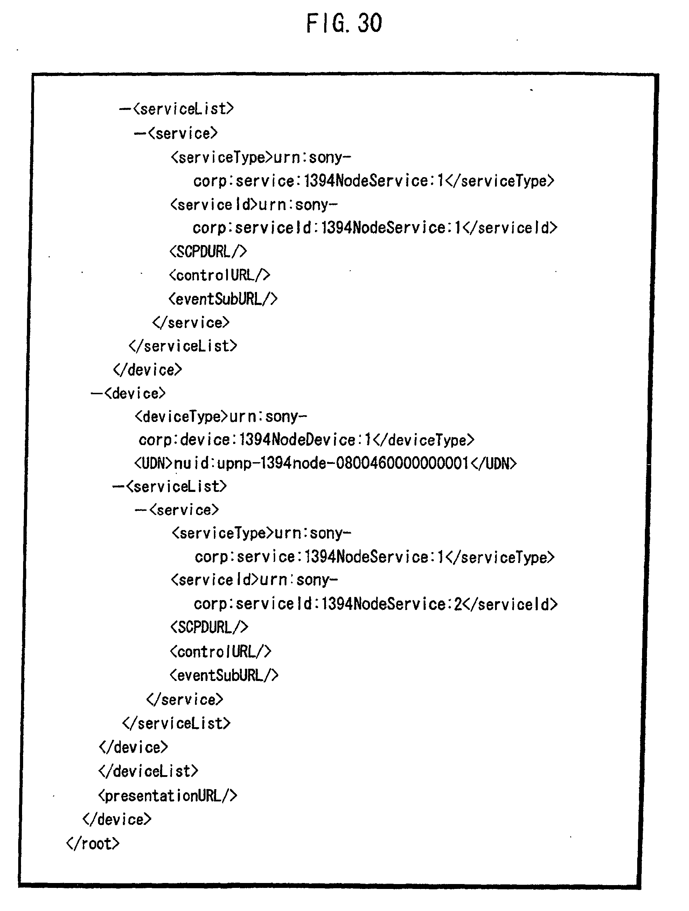

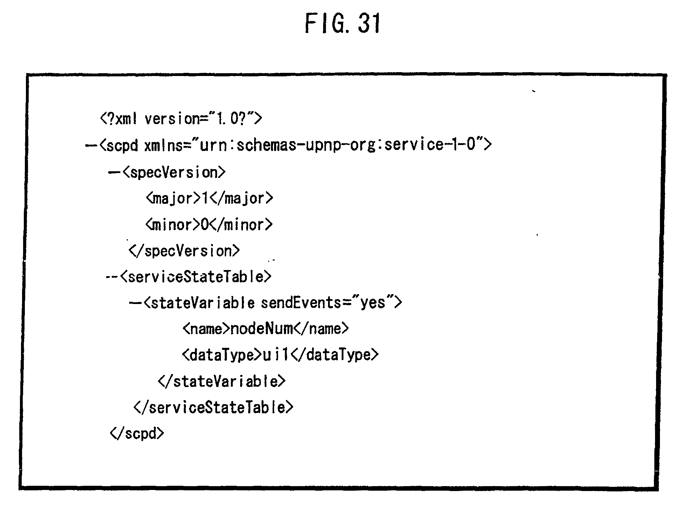

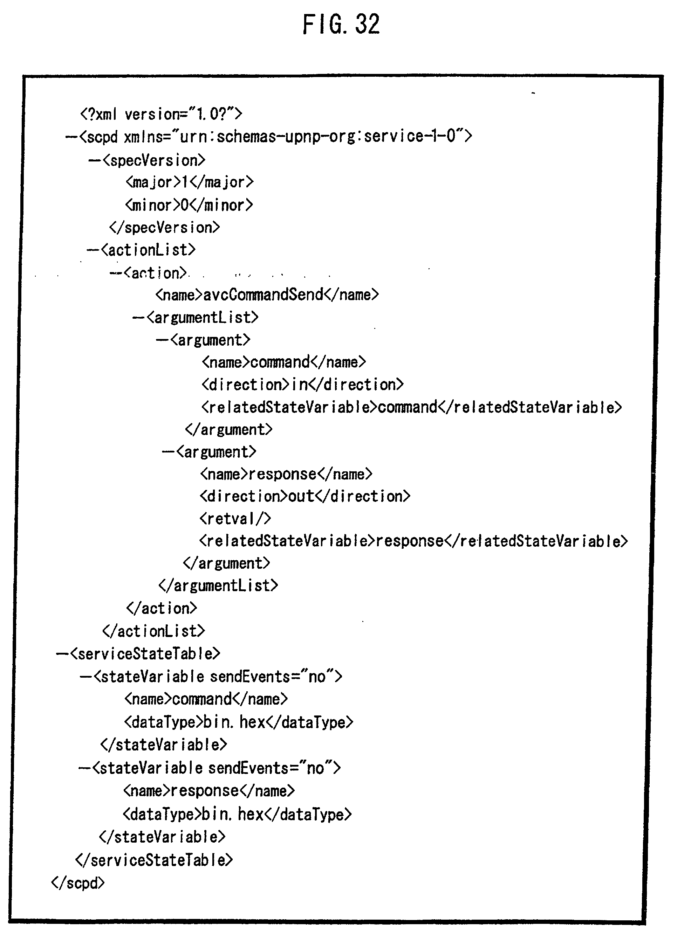

Fig. 29 and Fig. 30 show configuration examples of AV/C Proxy Device Description which the root device 61 of Fig. 28 has. Fig. 31 shows a configuration example of AV/C Proxy Service Description which the proxy service 71 of Fig. 28 has. Fig. 32 shows a configuration example of AV/C Node Service Description which the nodes services 72-1, 72-2 of Fig. 28 have.

In the examples of Fig. 29 and Fig. 30, serviceId "urn:sony-corp:serviceId:1394ProxyServicel" corresponds to the proxy service 71 of Fig. 28, and the URL of AV/C Proxy Service Description of Fig. 31 is described in SCPDURL of the serviceId.

### "serviceId"

"urn:sony-corp:serviceId:1394Node Service12" corresponds to the AV/C nodes service 72-1 of Fig. 28, and "urn:sony-corp:serviceId:1394NodeService2" corresponds to the AV/C nodes service 72-2. The URL of AV/C Node Service Description of Fig. 32 is described in the respective SCPDURL's.

In the example of Fig. 31, the variable of "NODE Num" is defined.

In the example of Fig. 32, an action "avcCommandSend" for sending an AV/C command.

Next, device models shown in Figs. 3, 19, 24 and 28 are compared to one another.

In the example of Fig. 3, one proxy service 71 and one node device 72 are defined in one root device 61.

In the example of Fig. 19, the proxy service 71 is defined in one root device 61-1, and the nodes services 72-1, 72-2 to several nodes on the 1394 are defined to every root device 61-2, 61-3, respectively.

In the example of Fig. 24, the proxy service 71 is provided in one root device 61, and the nodes services are provided corresponding to each node. The nodes services 72-1, 72-2 are held in one root device 61 in a similar way to the proxy service 71.

In the example of Fig. 28, all of the nodes on the 1394 are defined as the embedded devices 81-1, 81-2 of the root device 61.

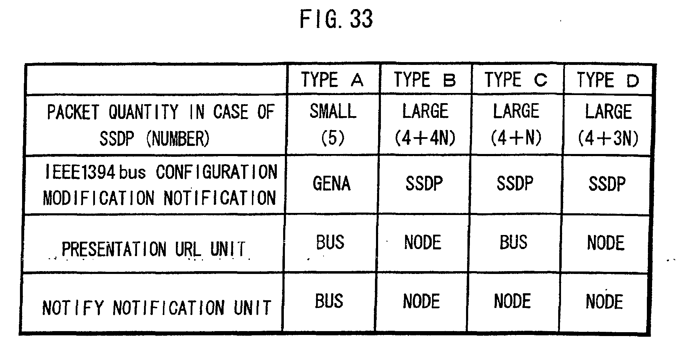

Fig. 33 shows a comparison result of the features of the device models of Figs. 3, 19, 24 and 28. Incidentally, in Fig. 33, "type A", "type B", "type C" and "type D" respectively correspond to the device models of Figs. 3, 19, 24 and 28.

By comparing the type A to the type D, it is known that packet quantities of SSDP greatly differ from one another. That is, when the number of the root device is one, the number of SSDP is 3 + 2d + k, where "d" designates the number of embedded devices, and "k" designates the number of service types. Consequently, if the number of the nodes on the 1394 network 12 is supposed to be N, the packet quantities of SSDP are 5 in case of the type A, 4 + 4N in case of the type B, 4 + N in case of the type C, and 4 + 3N in case of the type D. In particular, in case of the type B (Fig. 19) and the type D (Fig. 28), packets, the number of which is several times of the number of nodes, flow. Accordingly, in case of considering in view of the traffic of the network, the example of the type A (Fig. 3), having a small packet quantity of SSDP, is desirable.

Notice of a change of the configuration of a bus is performed in accordance with GENA in case of the type A, or is performed in accordance with SSDP in case of the types B, C and D.

The unit of the configuration of a presentation URL is a bus in case of the type A and the type C, or a node in case of the type B and the type D. It is easy to understand the units in case of the type B (Fig. 19) and type D (Fig. 28), both being capable of having a URL at every node. However, as for the type A (Fig. 3) and the type C (Fig. 24), it is considerable that, if the proxy service 71 prepares something like a link page to each node, a substantially corresponding function can be realized.

The unit of the notice of NOTIFY is a bus in case of the type A, or a node in case of the type B, C and D.

Putting all features described above together, it is considerable that the example of the type A (Fig. 3) is the most suitable.

Although a device connected with the IEEE 1394 network 12 is controlled by a device connected with the IEEE 802 network 11 in the above, it is also possible that the latter is controlled by the former.

The series of processes described above can be executed with hardware, but also can be executed with software. In the case where the series of processes is executed with software, a program constituting the software is installed from a network or a recording medium into a computer incorporated into exclusive hardware, or, for example, a general purpose computer capable of executing various functions with installed various programs.

The recording medium is, as shown in Fig. 2, composed of not only a package medium such as the magnetic disk 41 (including a floppy disk), the optical disk 42 (including a compact disk-read only memory (CD-ROM) and a digital versatile disk (DVD)), the magneto-optical disk 43 (including a mini disk (MD)), and the semiconductor memory 44, the package medium being distributed to users separately from the main body of an apparatus for supplying the program and including the recorded program therein, but also the ROM 22 or a hard disk included in the storage section 28a, both being supplied to a user in the state of being previously incorporated in the main body of an apparatus and including the recorded program.

It is to be noted that in the present specification, a step of describing a program to be recorded in a recording medium naturally includes processes executed in time series along a described order, but also includes processes executed in parallel or separately even if they are necessarily executed in time series.

Moreover, in the present specification, "system" indicates the whole apparatus composed of a plurality of apparatuses.

### Industrial Applicability

As described above, according to the present invention, a command based of SOAP from a first network based on IEEE 802 is converted to an AV/C command of a second network, a device connected with the second network can be easily and surely controlled by a device connected with the first network.

## Claims

1. An information processing apparatus transferring data between a first network in which communication is performed in a first format based on SOAP of IEEE 802 and a second network in which communication is performed in a second format based on an AV/C command of IEEE 1394, said apparatus **characterized by** comprising:
capture means for capturing data in said first format from said first network;
conversion means for converting a command based on said SOAP in said first format to said AV/C command in said second network to store the converted command into said second format, wherein said command is captured by said capture means; and
transmission means for transmitting said second format converted by said conversion means to said second network.

2. The information processing apparatus according to claim 1, wherein said conversion means includes a correspondence table of node unique ID and node ID, said node unique ID being described in the command based on said SOAP for designating a device connected with said second network, whereby said conversion means converts said node unique ID, described in the command based on said SOAP for designating said device connected with said second network, to said node ID based on said correspondence table.

3. The information processing apparatus according to claim 1, wherein said conversion means includes a correspondence table of said command based on said SOAP and said command to be transmitted to said second network based on said command based on said SOAP, whereby said conversion means retrieves said command based on said SOAP, said command corresponding to a response received through said second network, based on said correspondence table, and transmits a response corresponding to said command based on said SOAP to said first network.

4. The information processing apparatus according to claim 3, wherein said conversion means associates said command based on said SOAP with said response based on a transaction label included in said command based on said SOAP.

5. The information processing apparatus according to claim 1, wherein said conversion means transmits a response indicating being in process to a device connected to said first network when a final response corresponding to a request from said device connected to said first network is not received from a device connected to said second network within a period of time.

6. The information processing apparatus according to claim 1, wherein said apparatus is further **characterized by** a detection means for detecting a bus reset of said second network if said command based on said SOAP includes a command requesting resending at said bus reset of said second network, and for transmitting said command at occurrence of said bus reset in said second network.

7. The information processing apparatus according to claim 1, wherein said conversion means further converts said AV/C command of said second network to said command based on said SOAP of said first format to store said converted command into said first format, and
said transmission means further transmits said command based on said SOAP of said first format, said command being converted by said conversion means, to said first network.

8. An information processing method of an information processing apparatus transferring data between a first network in which communication is performed in a first format based on SOAP of IEEE 802 and a second network in which communication is performed in a second format based on an AV/C command of IEEE 1394, said method **characterized by** comprising:
a capture step of capturing data in said first format from said first network;
a conversion step of converting a command based on said SOAP in said first format, said command captured by a process of said capture step, to said AV/C command of said second network, and of storing said converted command into said second format; and
a transmission step of transmitting said second format converted by a process of said conversion step to said second network.

9. A recording medium storing a computer-readable program of an information processing apparatus transferring data between a first network in which communication is performed in a first format based on SOAP of IEEE 802 and a second network in which communication is performed in a second format based on an AV/C command of IEEE 1394, said program **characterized by** comprising:
a capture step of capturing data in said first format from said first network;
a conversion step of converting a command based on said SOAP in said first format, said command captured by a process of said capture step, to said AV/C command of said second network, and of storing said converted command into said second format; and
a transmission step of transmitting said second format converted by a process of said conversion step to said second network.

10. A program for making a computer execute steps, said computer controlling an information processing apparatus transferring data between a first network in which communication is performed in a first format based on SOAP of IEEE 802 and a second network in which communication is performed in a second format based on an AV/C command of IEEE 1394, said steps comprising:
a capture step of capturing data in said first format from said first network;
a conversion step of converting a command based on said SOAP in said first format, said command captured by a process of said capture step, to said AV/C command of said second network, and of storing said converted command into said second format; and
a transmission step of transmitting said second format converted by a process of said conversion step to said second network.
